# EUROPEAN PATENT SPECIFICATION

(11) **EP 3 917 803 B1**
(45) Date of publication and mention of the grant of the patent: **21.10.2026**
(21) Application number: 20702293.0
(22) Date of filing: 30.01.2020
(51) Int. Cl.: B60Q 1/08, B60Q 1/14, F21S 41/14, F21W 103/60, B60Q 1/00

(54) **LIGHTING SYSTEM OF AN AUTOMOTIVE VEHICLE**
BELEUCHTUNGSSYSTEM EINES KRAFTFAHRZEUGS
SYSTÈME D'ÉCLAIRAGE D'UN VÉHICULE AUTOMOBILE

(30) Priority: 01.02.2019 EP 19155158
(43) Date of publication of application: 08.12.2021
(73) Proprietor: Valeo Vision, 93012 Bobigny Cedex (FR)
(72) Inventor: ALBOU, Pierre, 93012 BOBIGNY Cedex (FR); CLADE, Sophie, 93012 BOBIGNY Cedex (FR); NISHIO, Taro, 93012 BOBIGNY Cedex (FR)
(74) Representative: Valeo Visibility
(86) International application number: PCT/EP2020/052363
(87) International publication number: WO 2020/157241

(56) References cited:
- EP-A1- 3 210 825
- EP-A1- 3 305 592
- EP-A1- 3 401 838
- EP-A1- 3 858 667
- EP-A2- 2 772 682
- DE-A1- 102017 129 254
- DE-A1- 102017 206 274
- DE-A1- 102018 105 563
- DE-A1- 102018 210 107
- JP-A- 2015 118 833
- JP-A- 2015 230 768

## Description

### TECHNICAL FIELD

The present invention relates to a lighting system for a vehicle, and more particularly, to a frontal headlamps for a vehicle.

### STATE OF THE ART

A motor vehicle is equipped with frontal headlamps for illuminating in front of the motor vehicle. The frontal headlamps are configured to be mounted on right and left portions of the front side of the vehicle. Each headlamp includes at least one light emitting device on its front right and at least one light emitting device on its front left. The right and the left are here defined with respect to the normal direction of circulation of the vehicle and for a user seated in the driving position. These light emitting devices are adapted to emit in particular light beams of low beam and / or high beam type, and daylight-like signaling beams, also called DRL (for "daytime running lamp"), position lamp, or direction indicator lamp.

In addition to the beams described above, these light emitting devices are more and more frequently adapted to project advanced functions in front of the vehicle. Recent developments in the field of these light devices make it possible to produce a pixelated light beam to project advanced functions. A pixelated light beam is in known manner a light beam subdivided into elementary light sub-beams called "pixels". With such pixelated light beam, the light device can also perform localized lighting functions, for example projecting a pattern on the stage. Such functions are known in the field of adaptive lighting. For example, glare free lighting is known by darkening an area corresponding to a vehicle coming from the front so as not to dazzle this other user. Another example is the vehicle driving in front of the equipped vehicle, in the same direction. In this case, the purpose of this kind of lighting is to avoid glaring the user through reflections on the side mirrors or internal mirror by darkening the corresponding area. Driving lighting is also known, for example by intensifying the markings on the ground or road signs so that they are more visible to the driver and / or projecting on the road one or more visible information of the driver.

However, such devices capable of generating advanced functions have a very high cost. Moreover, they generally have an increased power consumption. Finally, the high precision of the beams that they generate makes a careful and complex alignment necessary, which increases the cost even more.

The document EP 3 210 825 A1 discloses a vehicle lighting system comprising a single low resolution pixel lamp and a single high resolution pixel lamp.

The documents DE 10 2017 129254 A1, EP 2 772 682 A2 and EP 3 401 838 A1 disclose vehicle lighting systems combining a pair of high resolution lighting devices and a pair of lower resolution lighting devices.

### SUMMARY OF THE INVENTION

An object of the present invention is to solve the disadvantages described above of known lighting systems of a motor vehicle. In particular, it is the object of the present invention to provide a lighting system that can project two different pixelated beams having low and high resolutions, such that the lighting system can effectively perform advanced lighting functions while meeting the required luminous intensity for the vehicle.

Other object of the present invention is to provide a lighting system of lesser cost compared to conventional light systems, which projects same resolution type of pixelated light beams from both the frontal headlamps.

Another object of the present invention is to provide a lighting system, which consumes lesser power compared to conventional light systems.

According to the present invention defined in claim 1, there is provided a lighting system of a motor vehicle comprising one first light emitting device adapted to be mounted on a front right side of the vehicle and adapted to project in front of the vehicle a first pixelated light beam. The lighting system further comprises one second light emitting device adapted to be mounted on a front left side of the vehicle and adapted to project in front of the vehicle a second pixelated light beam. One of the first pixelated light beam and the second light beam, called high resolution beam, has a number of pixels greater than or equal to at least three times the number of pixels of the other of said pixelated light beams, called low resolution beam.

According to the present invention, one of the first pixelated light beam and the second light beam, called high resolution beam, has a number of pixels greater than or equal to at least five times, in particular greater than or equal to at least ten times, the number of pixels of the other of said pixelated light beams, called low resolution beam.

The first light emitting device is adapted to be mounted only on a front right side of the vehicle and second light emitting device adapted to be mounted only on a front left side of the vehicle. In other words, the lighting system comporting the first and second light emitting devices comprises only a light emitting device adapted to project the high resolution beam on one side and no light emitting device adapted to project the low resolution beam on the same side, and only a light emitting device adapted to project the low resolution beam on the other side and no light emitting device adapted to project the high resolution beam on this same other side. Then, as the light emitting device adapted to project the high resolution beam is only on one side of the pair of light emitting devices, generally right and left headlamps, of the light emitting system to be mounted on the vehicle, the global cost of the lighting system is reduced.

According to one non-limiting embodiment of the present invention, the low resolution beam covers a larger luminous field than the high resolution beam.

According to one non-limiting embodiment of the present invention, the low resolution beam extends horizontally over a wider angular field than the high resolution beam.

According to one non-limiting embodiment of the present invention, the low resolution beam extends vertically higher than the high resolution beam.

According to one non-limiting embodiment of the present invention, the high resolution beam extends vertically lower than the low resolution beam.

According to one non-limiting embodiment of the present invention, the low resolution beam presents a higher luminous intensity maximum than the high resolution beam

According to the present invention, the lighting system comprises a control module of the at least one first light emitting device and the at least second light emitting device, adapted to selectively control the switching ON and OFF of the pixels of the first pixelated light beam and the second pixelated light beam.

According to the present invention, the first pixelated light beam and the second pixelated light beam overlap at least partially.

According to the present invention, the control module is adapted to switch ON at least one pixel of the high resolution beam inside an area corresponding to at least one switched OFF pixel of the low resolution beam.

According to one non-limiting embodiment of the present invention, the at least one switched ON pixel of the high resolution beam is contiguous to or overlaps an edge of one switched ON pixel of the low resolution beam.

The first light emitting device and the second light emitting device are adapted to project in front of the vehicle a dark area corresponding to a vehicle, pedestrian or like coming from the front, or being positioned in the front. In other words, first light emitting device and the second light emitting device are adapted to project in front of the vehicle a glare free high beam so as not to dazzle this other user.

According to one embodiment not covered by the present invention, the first pixelated light beam and the second pixelated light beam are disjointed from each other.

According to one non-limiting embodiment of the present invention, the high resolution beam extends vertically lower than the low resolution beam.

According to one non-limiting embodiment of the present invention, the high resolution beam and the low resolution beam are arranged laterally to each other.

According to one non-limiting embodiment of the present invention, first light emitting device and the second light emitting device are adapted to perform a road surface drawing functions. For example, the road surface drawing functions include projecting in front of the vehicle at least one of images, patterns, logos, drawings, symbols, characters and/or like on a road surface.

According to one non-limiting embodiment of the present invention, the light emitting device adapted to project in front of the vehicle the low resolution beam is mounted on the same side of the vehicle where the steering wheel is located, and the light emitting device adapted to project in front of the vehicle the high resolution beam is mounted on the other side of the vehicle. It allows to reduce the cost of a damage that may be caused during accidents. Further, by mounting the light emitting device projecting high resolution beam on the other side of the vehicle, the probability of the expensive light emitting device to be impacted is reduced

According to one non-limiting embodiment of the present invention, there is provided an automotive vehicle comprising a lighting system according to the invention.

According to one non-limiting embodiment of the present invention, there is provided an automotive vehicle having a lighting system according to the invention, which includes one first light emitting device, and one second light emitting device to project low resolution beam and the high resolution beam.

According to one non-limiting embodiment of the present invention, the motor vehicle comprises one first light emitting device mounted on a front right side of the vehicle and adapted to project in front of the vehicle a first pixelated light beam and one second light emitting device mounted on a front left side of the vehicle and adapted to project in front of the vehicle a second pixelated light beam, one of the first pixelated light beam and the second light beam, called high resolution beam, having a number of pixels greater than or equal to at least five three times, in particular greater than or equal to at least ten times, the number of pixels of the other of said pixelated light beams, called low resolution beam.

According to one non-limiting embodiment of the present invention, the light emitting device adapted to project in front of the vehicle the low resolution beam is mounted on the same side of the vehicle where the steering wheel is located, and the light emitting device adapted to project in front of the vehicle the high resolution beam is mounted on the other side of the vehicle.

Thus, by providing a lighting system, which can project two different pixelated light beams of low and high resolutions from the right and left side of the frontal headlamps, cost and power consumption of the lighting system can be reduced while achieving a required luminous intensity for the vehicle.

### BRIEF DESCRIPTION OF THE INVENTION

To complete the description and to provide a better understanding of the invention, a set of drawings is provided. Said drawings form an integral part of the description and illustrate an embodiment of the invention, which should not be construed as restricting the scope of the invention, but only as an example of how the invention can be carried out. The drawings comprise the following characteristics.
Figure 1 shows a schematic top view of an automotive vehicle comprising light emitting devices, according to an embodiment of the present invention.
Figure 2a and Figure 2b shows a projection of a low resolution beam and a high resolution beam on a virtual vertical screen placed in front of a vehicle, according to an embodiment of the present invention.
Figure 3a and Figure 3b shows schematic views of illumination regions formed by low and high resolution beams, according to an embodiment of the present invention.
Figure 3c, Figure 3d, Figure 3e shows enlarged portion of a circular area indicated in the Figure 3b, according to an embodiment of the present invention.
Figure 4 shows schematic view of an illumination region formed by low and high resolution beams, according to another embodiment of the present invention.

### DETAILED DESCRIPTION OF THE INVENTION

Hereinafter, embodiments of the present invention will be described with reference to the accompanying drawings.

According to an embodiment of the present invention, a lighting system comprises a pair of frontal headlamps. The pair of frontal headlamps are configured to be mounted on right and left sides of a front portion of a vehicle. The lighting system can realize a global illumination function on at least a portion of the scene, which is the vehicle environment, may be illuminated by the lighting system. The part of the well lit by the global lighting scene may be a driving field of view, made visible or more visible to the driver to assist him or allow him driving. The overall lighting can thus be for example a high beam function or a function of low beam.

Each frontal headlamp includes at least one light emitting device. One of the headlamp may include at least one first light emitting device to produce a first pixelated light beam and other headlamp may include at least one second light emitting device to produce a second pixelated light beam. The first pixelated light beam and the second pixelated light beam comprises a plurality of pixels extending either in one direction (horizontal or vertical) or extending in both the horizontal and vertical directions.

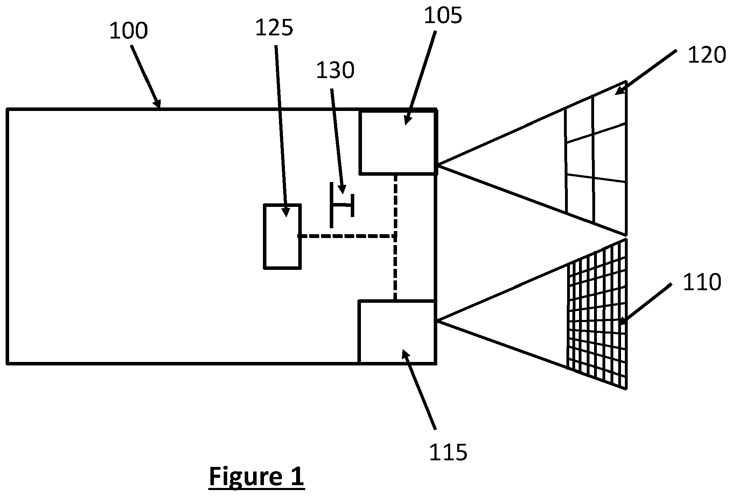

Figure 1 shows a schematic top view of an automotive vehicle 100 comprising light emitting devices, according to an embodiment of the present invention. The vehicle 100 comprises a lighting system having a pair of frontal headlamps. The pair of frontal headlamps are configured to be mounted on right and left sides of a front portion of a vehicle 100. As can be seen from the Figure 1, the lighting system comprises at least one first light emitting device 105 mounted on a front left side of the vehicle 100 and adapted to project in front of the vehicle a first pixelated light beam 120. The lighting system further comprises at least one second light emitting device 115 mounted on a front right side of the vehicle 100 and adapted to project in front of the vehicle a second pixelated light beam 110.

The lighting system further includes a control module 125 coupled to the at least one first light emitting device 105 and the at least one second light emitting device 115. The control module 125 can thus control generating and / or the projection of the pixelated light beams 110, 120. In an aspect, the control module 125 can be integrated to the light device, i.e., headlamp, in particular in one of the right and left headlamps. The control module 125 may include a processor (or CPU acronym for "Central Processing Unit", literally "CPU") coupled with a memory on which is stored a computer program which includes instructions enabling the processor to perform steps generating signals for controlling the light source. The control module 125 thus may for example individually control the light emission of each pixel.

In an embodiment, one of the first pixelated light beam 120 and second pixelated light beam 110, called high resolution beam, has a number of pixels greater than or equal to at least five times, in particular greater than or equal to at least ten times, the number of pixels of the other of said pixelated light beams, called low resolution beam. In this example, 120 is the low resolution beam and 110 is the high resolution beam.

In an embodiment, the low resolution beam covers a larger luminous field than the high resolution beam.

A pixelated light beam may be projected by the vehicle headlamp or a lighting device comprising a light source, i.e., at least one light emitting device. The light source may be adapted to cooperate with an optical system (integrated in the device or not) arranged to project on the road a pixelated light beam emitted by the light source. The same light source can emit global illumination and image. In one specific embodiment, the light source is divided into several units of individually controllable light sources. Each pixel emitted by the light source, and thus each light source unit may correspond to one pixel of the light beam projected pixelated. Thus, the light intensity of each pixel of the light source and thus the illumination of each pixel of the scene can be individually controlled.

In an embodiment, the at least one first light emitting device or the at least one second light emitting device comprises a so called matrix beam module for producing a matrix beam, which is a kind of glare free high beam. Projected on a virtual vertical screen disposed at the front of the vehicle 100, for example at a distance of 25 meters from the front of the vehicle, the matrix beam comprises a plurality of segments arranged in a row as shown for instance in the patent published under the reference FR 1.306.770. Known recent matrix beam modules comport one or several light source(s), especially semiconductor light source(s), and an optical system comprising one or several reflector(s), one or several lense(s), one or several light guide(s), or a combination of reflector(s), lens(es), and/or light guide(s). Typical angular extension is about +/-20° horizontally from an optical axis of the module. Typically, the beam comprises between 4 and 20 segments. Such a module is designated by matrix beam module in the present application.

In an embodiment, the at least one first light emitting device or the at least one second light emitting device comprises a so called pixel beam module for producing a pixel beam. The pixel beam comprises a plurality of pixels arranged in matrix comprising at least two rows and two columns, at least one row being in the high beam zone. In addition, the size of the pixels can be smaller compared to the segments of the matrix beam, which allows a better resolution of the beam. The width and/or height of the pixels can change within one row, or between the rows. An example of this kind of pixel beam is described in the patent published under the reference DE 10 2007 052 745. Known recent pixel beam modules comport one or several light source(s), especially semiconductor light source(s), and an optical system comprising one or several reflector(s), one or several lense(s), one or several light guide(s), or a combination of reflector(s), lens(es), and/or light guide(s). Such a module is designated by pixel beam module in the present application.

In an embodiment, the at least one first light emitting device or the at least one second light emitting device comprises a DMD (the acronym standing for "Digital Mirror Device") where the rotational modulation mirrors microphones provides a desired luminous intensity in a given direction.

In an embodiment, the at least one first light emitting device or the at least one second light emitting device comprises a LCD (acronym for "Liquid Crystal Displays") comprising a surface light source in front of which the liquid crystals are placed. The movement of the liquid crystals can allow or disallow the passage of light and thus forms pixelated light beam.

In an embodiment, the at least one first light emitting device or the at least one second light emitting device comprises a laser scan type mechanism for sending a light beam to a scanning system, which distributes it on the surface of a wavelength conversion device, such as a plate having a photoluminescent material.

In an embodiment, the at least one first light emitting device or the at least one second light emitting device comprises one or more light emitting sources. In one embodiment, the light emitting source is a light source solid state (standing for "solid-state lighting") which comprises at least one light emitting element. Examples include emitting element emitting diode or LED (acronym for "Light Emitting Diode"), organic light emitting diode or OLED (acronym for "Organic Light-Emitting Diode"), or a polymer LED or PLED (acronym for "Polymer Light-Emitting Diode"). The light emitting source may be a semiconductor light source. Each light emitting element or group of light emitting elements may form a pixel and can emit light when the material is supplied with electricity. The light emitting elements may each be semiconductor, that is to say they each have at least one semiconductor material.

In an embodiment, the light sourceof the at least one first light emitting device or the at least one second light emitting device comprises a solid-emitting monolithic conductor. The light source may for example be a monolithic matrix of pixels. The light source may for example be a monolithic matrix of LEDs. A monolithic matrix comprises at least 50 light emitting elements located on the same substrate (e.g. on the same face of the substrate), for example more than 100, 1000 or thousands of light emitting elements.

Each above-mentioned technology provides different pixelated light beams having number of pixels and each pixel can be controlled based on the requirements. By way of an example, and not limitation, LCD, DMD and laser scan technologies can provide beams having pixels that are at least 5 to 10 times more than the number of pixels provided by monolithic light source technology. Further monolithic light source technology can provide beams having pixels that are at least 5 to 10 times more than the number of pixels provided by the pixel technology.

As previously mentioned, in accordance with the present invention, each frontal headlamp includes at least one light emitting device 105, 115 i.e., a light source.

One of the headlamp may include at least one first light emitting device 105 to produce a first pixelated light beam 120 and other headlamp may include at least one second light emitting device 115 to produce a second pixelated light beam 110. The first pixelated light beam 120 and the second pixelated light beams 110 are of different resolutions. In an embodiment, one of the first pixelated light beam and the second pixelated light beam in high resolution beam, and other pixelated light beam is a high resolution beam. As mentioned above, in this example, 120 is the low resolution beam and 110 is the high resolution beam.

In an example, the at least one first light emitting device 105 comprises a matrix beam module as previously defined to generate and project a first pixelated light beam 120 and the at least one second light emitting device 115 comprises a DMD to generate and project a second pixelated light beam 110, or vice versa.

In another example, the at least one first light emitting device 105 comprises a matrix beam module to generate and project a first pixelated light beam 120 and the at least one second light emitting device 115 comprises a pixel beam module as previously defined to generate and project a second pixelated light beam 110, or, vice versa.

In another example, the at least one first light emitting device 105 comprise a monolithic light source to generate and project a first pixelated light beam 120 and the at least one second light emitting device 115 comprises a DMD to generate and project a second pixelated light beam 110, or, vice versa. For example, for left hand driven vehicles, left side headlamp may be mounted with monolithic light source and the right side headlamp is mounted with the DMD.

In another example, the at least one first light emitting device 105 comprises a matrix beam module to generate and project a first pixelated light beam 120 and the at least one second light emitting device 115 comprises a monolithic light source to generate and project a second pixelated light beam 110, or, vice versa. For example, for left hand driven vehicles, left side headlamp may be mounted with monolithic light source and the right side headlamp is mounted with matrix beam module.

For the purpose of understanding, only some of combinations of technologies are mentioned above. However, different combinations of technologies can be incorporated in the vehicle headlamps such that the low resolution beam and the high resolution beam can be projected from frontal headlamps.

In an embodiment, in order to reduce the cost of damage that may be caused during accidents, the light emitting device adapted to project in front of the vehicle the low resolution beam may be mounted on the same side of the vehicle where the steering wheel 130 is located, and the light emitting device adapted to project in front of the vehicle the high resolution beam may be mounted on the other side of the vehicle. Further, by mounting the light emitting device projecting high resolution beam on the other side of the vehicle, the probability of this expensive light emitting device to be impacted is reduced

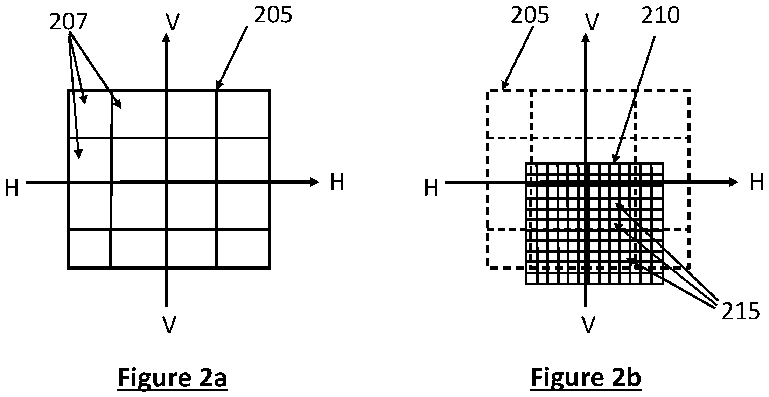

Figure 2a and Figure2b shows a projection of a low resolution beam and a high resolution beam on a virtual vertical screen placed in front of a vehicle, according to an embodiment of the present invention. In particular, Figure 2a shows illumination region or a light distribution pattern formed by a projection of a low resolution beam on a virtual vertical screen disposed at the front of the vehicle 100. The distance of the screen to the lighting system may be chosen between 10m and 50m. For example the distance is 25 meters, or 100 feet. The screen can also be a portion of sphere, centered onto the lighting system. The radius of the sphere may have the same value as the distance described previously.

Reference number 205 in the Figure 2a indicates an illumination region formed by the projection of the low resolution beam. In the example shown in the Figure 2a, the low resolution beam 205 comprises 16 pixels 207. As can be seen from the Figure 2a, pixels are arranged in matrix comprising 4 rows and 4 columns. In another examples the low resolution beam 205 could comport more or less than 16 pixels, and the pixels could be arranged in matrix have the same number, or different numbers, of rows and columns. Although the pixels shown in the Figure 2a are of same size, it is understood to a person skilled in the art that pixels can be of different sizes in terms of width and/or height.

In an embodiment of the present invention, the first pixelated light beam 120 and the second pixelated light beam 115 overlap at least partially, which can be seen from the Figure 2b. Figure 2b shows a light distribution pattern formed by a projection of a high resolution beam and a low resolution beam on a virtual vertical screen disposed at the front of the vehicle 100, for example at a distance of 25 meters from the front of the vehicle. Reference number 210 in the Figure 2b indicates an illumination region formed by the by the projection of the high resolution beam having high resolution beam pixels 215, and the trace of the low resolution beam is indicated by the reference numeral 205. Dotted lines in the Figure 2b corresponds to the trace of the low-resolution beam.

The projection of the low beam and high beams are shown with respect to the horizontal axis (H) and vertical axis (V). The crossing point of the horizontal axis and the vertical axis i.e., center of the projected beams corresponds to an optical axis of the vehicle headlamp.

As can be seen from the Figure 2b, the low resolution beam 205 extends horizontally over a wider angular field than the high resolution beam 210. Further, as can be seen from the Figure 2b, the low resolution beam 205 extends vertically higher than the high resolution beam 210, i.e., upper edge of the low resolution beam 205 is higher than the upper edge of the high resolution beam 210. Further, as can be seen from the Figure 2b, the high resolution beam 210 extends vertically lower than the low resolution beam 205, i.e., lower edge of the high resolution beam 210 is lower than the lower edge of the low resolution beam 205.

The lighting system further comprises a leveling mechanism (not shown in the Figures) to adjust beam angular position of the low resolution in horizontal direction, i.e., along the horizontal line (H-H line) and/or in the vertical direction, i.e., along the vertical line (V-V line). The lighting system may further comprise a leveling mechanism (not shown in the Figures) to adjust beam angular position beam of the high resolution beam along the horizontal line (H-H line) and/or in the vertical direction, i.e., along the vertical line (V-V line). In another embodiment, the adjustment of the angular position of the high resolution beam according to the angular position of the low resolution beam is made by calibration, especially an electronic calibration, of the pixels corresponding to a given direction, without leveling mechanism. It allows to simplify the alignment of both beams and to avoid the extra-cost of a mechanical aiming.

In an embodiment, the low resolution beam presents a higher luminous intensity than the high resolution beam. For example, it is not expensive to create 120 Lux with matrix beam technology compared to DMD light technology. On the other hand, it is very expensive to create matrix beam module with high resolution and it is not very expensive to create a beam comprising a lot of pixels with DMD.

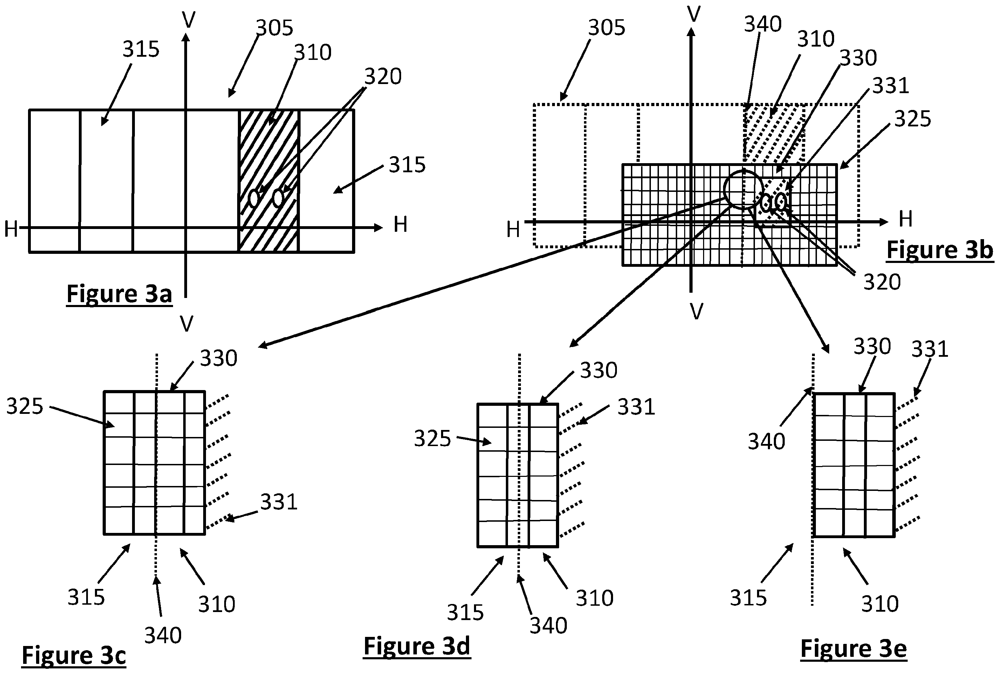

Figure 3a and Figure 3b shows schematic views of illumination regions formed by low and high resolution beams, according to an embodiment of the present invention.

Figure 3a shows an example of light distribution pattern that is obtained by the at least one light emitting device configured to project a low resolution beam on the virtual vertical screen, disposed at the front of the vehicle. The screen is similar to the screen described in the context of Figure 2a and Figure 2b. In this example, low resolution beam is a matrix beam.

Reference number 305 in the Figure 3a indicates the low resolution beam. In this example, low resolution beam 305 is a matrix beam, and segments of the beam are arranged in one row. Here, a hatched region 310 in the Figure 3a represents a non-illumination region of the low resolution beam 305 that it is not illuminated with light, i.e., the control module 125 is operated to switch OFF the one or more low resolution segments. The region 315 other than the hatched region represents an illumination region of the low resolution beam 305 that is illuminated with light, i.e., the control module is operated to switch ON the one or more low resolution segments. Reference numeral 320 indicates a light, for example a headlamp or a rearlamp, of a preceding or incoming vehicle detected by the control module 125. The control module 125 may also be configured to detect the presence of a pedestrian, a preceding vehicle, or the like and controls the operation of the light sources mounted within the headlamps of the vehicle 100, thereby changes the light distribution pattern to suppress glare to the pedestrian, the preceding vehicle, or the like.

Figure 3b shows an example of light distribution pattern that is obtained by combining the low resolution beam 305 (shown in dotted lines in Figure 3b) and the high resolution beam (shown in solid lines in Figure 3b) by projecting them on the virtual vertical screen, disposed at the front of the vehicle, for example at a distance of 25 meters from the front of the vehicle.

Whenever the control module 125 detects the presence of the pedestrian, the preceding vehicle or the like in front of the vehicle 100, the control module 125 is adapted to switch ON at least one pixel of the high resolution beam 325 inside an area corresponding to at least one switched OFF segment of the low resolution beam 305. This can be seen clearly from the Figure 3b. In particular, reference numeral 330 indicates an area in which the at least one pixel of the high resolution beam 325 is switched ON inside the area corresponding to the at least one switched OFF segment of the low resolution beam 305, here in the region 310, to reduce the dark area that is created by switching OFF the one or more segments of the low resolution beam 305. Reference numeral 331 indicates an area in which both the high resolution beam and low resolution beam 305 are switched OFF to avoid glaring the other user. As it is visible on Figure 3b, the remaining non-illuminated area 331 has a reduced size compared to the non-illuminated area 310 of the low resolution beam 305. It allows improving the lighting of the scene and still having non-glaring function. In this way, the lighting system of the present embodiment can suppress glare to the pedestrian, the preceding vehicle or the like by switching OFF the segments or pixels corresponding to the regions where the pedestrian, the preceding vehicle or the like which are detected by the vehicle information acquiring devices. On the other hand, the lighting of the scene is improved for the driver of the vehicle equipped with the light system according to the invention, as the illuminated portion of the scene is increased.

Further, it is noted from the Figure 3b that the at least one switched ON pixel of the high resolution beam 325 is contiguous to or overlaps an edge of at least one switched ON segment of the low resolution beam 305 as it will be described in relation with Figure 3c, 3d and 3e which correspond to an enlarged view of the elements inside the circle on Figure 3b, for three different embodiments. On these Figures, reference numeral 340 is an edge of a switched ON segment of the low resolution beam 305 that is a border between the illuminated region 315 and the non-illuminated region 310. On one side, there is a switched ON segment of the region 315. On the other side there is the switched OFF segment of the region 310.

In the embodiment of Figure 3c, some switched ON pixels of high resolution beam are in the illuminated area 315 of low resolution beam 305 and some switched ON pixels of the high resolution bean are in the non-illuminated area 310 of low resolution beam 305. Some high resolution pixels have an edge that is at the same place as an edge 340 of low resolution segments.

In another embodiment shown in the Figure 3d, some switched ON pixels of high resolution beam are in the illuminated area 315 of low resolution beam 305 and some switched ON pixels of the high resolution beam are in the non-illuminated area 310 of low resolution beam 305. In this embodiment, some high resolution pixels overlap the edge 340 of low resolution pixels. In this embodiment the high resolution pixels overlapping the edge 340 of low resolution pixels can be the only ones switched ON in the illuminated area 315 of low resolution beam 305. Alternatively, additional high resolution pixels may be illuminated in the illuminated area 315 of low resolution beam 305, and completely be included in this illuminated area 315.

Yet, in another embodiment, switched ON pixels of the high resolution beam are only in the non-illuminated area 310 of low resolution beam 305, as shown in the Figure 3e. In this embodiment some high resolution pixels have an edge that is at the same place as an edge 340 of low resolution segments and no pixel of the high resolution beam is switched ON in the illuminated region 315 of the low resolution beam 305.

Although Figures 3c, 3d and 3e are described in relation with a specific example, it is clear that they apply to any kind of low resolution beam and high resolution beam, as long as these beams at least partially overlap.

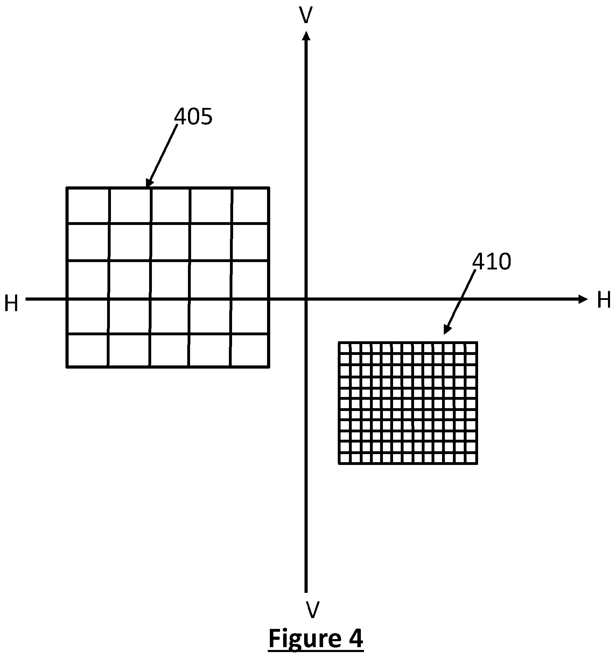

According to another embodiment not covered by the present invention, the first pixelated light beam 110 and the second pixelated light beam 120 are projected in such a way that they are disjointed from each other, i.e., the projected low resolution beam 405 and the high resolution beam 410 are disjointed from each other as can be seen from the Figure 4. The projection of beams according to this embodiment facilitates in performing advancing lighting functions like suppressing the glare on one side and road surface drawing function on other side. For example, the road surface drawing functions include projecting in front of the vehicle at least one of images, patterns, logos, drawings, symbols, characters and/or like on a road surface.

In an embodiment, the high resolution beam 410 extends vertically lower than the low resolution beam 405. This type of projection of beams according this embodiment are adapted to perform glare free high beam on one side and road surface drawing function on other side. For example, low resolution beam 405 can be adapted to perform glare free function and the high resolution beam 410 can be adapted to perform road surface drawing functions.

In another embodiment, the low resolution beam 405 and the high resolution beam 410 are projected in such way that they are arranged laterally to each other. This type of projection of beams according this embodiment are adapted to perform high resolution road surface drawing function on one side and low resolution road surface drawing function on other side.

According to another embodiment, the present invention discloses an automotive vehicle 100 having a lighting system having at least one first light emitting device and at least one second light emitting device to produce low resolution beam and the high resolution beam.

Thus, the present invention provides a lighting system that can project two different pixelated light beams having different resolutions to reduce the cost and power consumption, while achieving the required luminous intensity for the vehicle.

## Claims

1. A Lighting system of a motor vehicle comprising:
- a first light emitting device (105) adapted to be mounted on a front right side of the vehicle and adapted to project in front of the vehicle a first pixelated light beam (120);
- a second light emitting device (115) adapted to be mounted on a front left side of the vehicle and adapted to project in front of the vehicle a second pixelated light beam (110);
**characterized in that** one of the first pixelated light beam (105) and second pixelated light beam (115), called high resolution beam, has a number of pixels greater than or equal to at least three times the number of pixels of the other of said pixelated light beams, called low resolution beam, and
**in that** it comprises only one light emitting device adapted to project the high resolution beam on one side and no light emitting device adapted to project the low resolution beam on the same side, and only one light emitting device adapted to project the low resolution beam on the other side and no light emitting device adapted to project the high resolution beam on this same other side,
**in that** it further comprises a control module (125) of the first light emitting device (105) and the second light emitting device (115), adapted to selectively control the switching ON and OFF of the pixels of the first pixelated light beam (120) and the second pixelated light beam (110),
**in that** the first pixelated light beam (205) and the second pixelated light beam (210) overlap at least partially, and
**in that** the control module (125) is adapted to switch ON at least one pixel of the high resolution beam (325) inside an area corresponding to at least one switched OFF pixel of the low resolution beam (305), to reduce the dark area that is created by switching OFF the one or more segments of the low resolution beam (305),
so that whenever the control module (125) detects the presence of the pedestrian, the preceding vehicle or the like in front of the vehicle (100), the control module (125) is adapted to switch ON at least one pixel of the high resolution beam (325) inside an area corresponding to at least one switched OFF segment of the low resolution beam (305),
thereby changing the light distribution pattern to suppress glare to the pedestrian, the preceding vehicle, or the like.

2. The lighting system according to any one of the preceding claims, **characterized in that** the low resolution beam (205) covers a larger luminous field than the high resolution beam (210).

3. The lighting system according to any one of the preceding claims, **characterized in that** the low resolution beam (205) extends horizontally over a wider angular field than the high resolution beam (210) and/or **in that** the low resolution beam (205) extends vertically higher than the high resolution beam (210).

4. The lighting system according to any one of the preceding claims, **characterized in that** the high resolution beam (210) extends vertically lower than the low resolution beam (205).

5. The lighting system according to any one of the preceding claims, **characterized in that** the low resolution beam (205) presents a higher luminous intensity maximum than the high resolution beam (210).

6. The lighting system according to any one of the preceding claims, **characterized in that** the first light emitting device (105) and the second light emitting device (115) are adapted to project in front of the vehicle a dark area corresponding to a vehicle, pedestrian or like coming from the front.

7. An Automotive vehicle, **characterized in that** it comports a lighting system according to any one of the preceding claims.

8. The Automotive vehicle according to the preceding claim, **characterized in that** the light emitting device (105) adapted to project in front of the vehicle the low resolution beam (120) is mounted on the same side of the vehicle where the steering wheel (130) is located, and the light emitting device (115) adapted to project in front of the vehicle the high resolution beam (110) is mounted on the other side of the vehicle.

## Patentansprüche

1. Beleuchtungssystem eines Kraftfahrzeugs, umfassend:
- eine erste Leuchtvorrichtung (105), die dazu geeignet ist, an einer vorderen rechten Seite des Fahrzeugs montiert zu werden, und dazu geeignet ist, einen ersten pixelierten Lichtstrahl (120) vor das Fahrzeug zu projizieren;
- eine zweite Leuchtvorrichtung (115), die dazu geeignet ist, an einer vorderen linken Seite des Fahrzeugs montiert zu werden, und dazu geeignet ist, einen zweiten pixelierten Lichtstrahl (110) vor das Fahrzeug zu projizieren;
**dadurch gekennzeichnet, dass** einer der ersten pixelierten Lichtstrahlen (105) und zweiten pixelierten Lichtstrahlen (115), als Hochauflösungsstrahl bezeichnet, eine Anzahl von Pixeln aufweist, die mindestens dreimal so groß ist wie die Anzahl von Pixeln des anderen der genannten pixelierten Lichtstrahlen ist, der als Niedrigauflösungsstrahl bezeichnet wird, und
dadurch, dass es nur eine Leuchtvorrichtung umfasst, die dazu geeignet ist, den Hochauflösungsstrahl auf einer Seite zu projizieren, und keine Leuchtvorrichtung, die dazu geeignet ist, den Niedrigauflösungsstrahl auf derselben Seite zu projizieren, und nur eine Leuchtvorrichtung, die dazu geeignet ist, den Niedrigauflösungsstrahl auf der anderen Seite zu projizieren, und keine Leuchtvorrichtung, die dazu geeignet ist, den Hochauflösungsstrahl auf dieser selben anderen Seite zu projizieren,
dadurch, dass es ferner ein Steuermodul (125) der ersten Leuchtvorrichtung (105) und der zweiten Leuchtvorrichtung (115) umfasst, das dazu geeignet ist, das Ein- und Ausschalten der Pixel des ersten pixelierten Lichtstrahls (120) und des zweiten pixelierten Lichtstrahls (110) selektiv zu steuern,
dadurch, dass der erste pixelierte Lichtstrahl (205) und der zweite pixelierte Lichtstrahl (210) sich zumindest teilweise überlappen, und
dadurch, dass das Steuermodul (125) dazu geeignet ist, mindestens ein Pixel des Hochauflösungsstrahls (325) innerhalb eines Bereichs einzuschalten, der mindestens einem ausgeschalteten Pixel des Niedrigauflösungsstrahls (305) entspricht, um den dunklen Bereich zu reduzieren, der durch das Ausschalten eines oder mehrerer Segmente des Niedrigauflösungsstrahls (305) entsteht, sodass immer dann, wenn das Steuermodul (125) die Anwesenheit des Fußgängers, des vorausfahrenden Fahrzeugs oder dergleichen vor dem Fahrzeug (100) erkennt, das Steuermodul (125) dazu geeignet ist, mindestens ein Pixel des Hochauflösungsstrahls (325) innerhalb eines Bereichs einzuschalten, der mindestens einem ausgeschalteten Segment des Niedrigauflösungsstrahls (305) entspricht, wodurch das Lichtverteilungsmuster geändert wird, um die Blendung des Fußgängers, des vorausfahrenden Fahrzeugs oder dergleichen zu unterdrücken.

2. Beleuchtungssystem nach einem der vorhergehenden Ansprüche, **dadurch gekennzeichnet, dass** der Niedrigauflösungsstrahl (205) ein größeres Leuchtfeld abdeckt als der Hochauflösungsstrahl (210).

3. Beleuchtungssystem nach einem der vorhergehenden Ansprüche, **dadurch gekennzeichnet, dass** der Niedrigauflösungsstrahl (205) sich horizontal über ein breiteres Winkelfeld erstreckt als der Hochauflösungsstrahl (210) und/oder dass der Niedrigauflösungsstrahl (205) sich vertikal höher erstreckt als der Hochauflösungsstrahl (210).

4. Beleuchtungssystem nach einem der vorhergehenden Ansprüche, **dadurch gekennzeichnet, dass** der Hochauflösungsstrahl (210) sich vertikal tiefer erstreckt als der Niedrigauflösungsstrahl (205).

5. Beleuchtungssystem nach einem der vorhergehenden Ansprüche, **dadurch gekennzeichnet, dass** der Niedrigauflösungsstrahl (205) ein höheres maximales Lichtstärkeniveau aufweist als der Hochauflösungsstrahl (210).

6. Beleuchtungssystem nach einem der vorhergehenden Ansprüche, **dadurch gekennzeichnet, dass** die erste Leuchtvorrichtung (105) und die zweite Leuchtvorrichtung (115) dazu geeignet sind, einen dunklen Bereich vor das Fahrzeug zu projizieren, der einem von vorne kommenden Fahrzeug, Fußgänger oder dergleichen entspricht.

7. Kraftfahrzeug, **dadurch gekennzeichnet, dass** es ein Beleuchtungssystem nach einem der vorhergehenden Ansprüche umfasst.

8. Kraftfahrzeug nach dem vorhergehenden Anspruch, **dadurch gekennzeichnet, dass** die Leuchtvorrichtung (105), die dazu geeignet ist, den Niedrigauflösungsstrahl (120) vor das Fahrzeug zu projizieren, auf derselben Seite des Fahrzeugs montiert ist, auf der sich das Lenkrad (130) befindet, und die Leuchtvorrichtung (115), die dazu geeignet ist, den Hochauflösungsstrahl (110) vor das Fahrzeug zu projizieren, auf der anderen Seite des Fahrzeugs montiert ist.

## Revendications

1. Système d'éclairage d'un véhicule automobile comprenant :
- un premier dispositif émetteur de lumière (105) adapté pour être monté sur un côté avant droit du véhicule et adapté pour projeter devant le véhicule un premier faisceau lumineux pixélisé (120) ;
- un deuxième dispositif émetteur de lumière (115) adapté pour être monté sur un côté avant gauche du véhicule et adapté pour projeter devant le véhicule un deuxième faisceau lumineux pixélisé (110) ;
**caractérisé en ce que** l'un du premier faisceau lumineux pixélisé (105) et du deuxième faisceau lumineux pixélisé (115), appelé faisceau haute résolution, présente un nombre de pixels supérieur ou égal à au moins trois fois le nombre de pixels de l'autre desdits faisceaux lumineux pixélisés, appelé faisceau basse résolution, et
**en ce qu'**il comprend un seul dispositif émetteur de lumière adapté pour projeter le faisceau haute résolution d'un côté et aucun dispositif émetteur de lumière adapté pour projeter le faisceau basse résolution du même côté, et un seul dispositif émetteur de lumière adapté pour projeter le faisceau basse résolution de l'autre côté et aucun dispositif émetteur de lumière adapté pour projeter le faisceau haute résolution de ce même autre côté,
**en ce qu'**il comprend en outre un module de commande (125) du premier dispositif émetteur de lumière (105) et du deuxième dispositif émetteur de lumière (115), adapté pour commander sélectivement l'allumage et l'extinction des pixels du premier faisceau lumineux pixélisé (120) et du deuxième faisceau lumineux pixélisé (110),
**en ce que** le premier faisceau lumineux pixélisé (205) et le deuxième faisceau lumineux pixélisé (210) se chevauchent au moins partiellement, et
**en ce que** le module de commande (125) est adapté pour allumer au moins un pixel du faisceau haute résolution (325) à l'intérieur d'une zone correspondant à au moins un pixel éteint du faisceau basse résolution (305), afin de réduire la zone sombre créée par l'extinction d'un ou plusieurs segments du faisceau basse résolution (305), de sorte que chaque fois que le module de commande (125) détecte la présence du piéton, du véhicule précédent ou similaire devant le véhicule (100), le module de commande (125) est adapté pour allumer au moins un pixel du faisceau haute résolution (325) à l'intérieur d'une zone correspondant à au moins un segment éteint du faisceau basse résolution (305), modifiant ainsi le schéma de distribution lumineuse pour supprimer l'éblouissement du piéton, du véhicule précédent ou tout autre élément similaire.

2. Système d'éclairage selon l'une quelconque des revendications précédentes, **caractérisé en ce que** le faisceau basse résolution (205) couvre un champ lumineux plus grand que le faisceau haute résolution (210).

3. Système d'éclairage selon l'une quelconque des revendications précédentes, **caractérisé en ce que** le faisceau basse résolution (205) s'étend horizontalement sur un champ angulaire plus large que le faisceau haute résolution (210) et/ou **en ce que** le faisceau basse résolution (205) s'étend verticalement plus haut que le faisceau haute résolution (210).

4. Système d'éclairage selon l'une quelconque des revendications précédentes, **caractérisé en ce que** le faisceau haute résolution (210) s'étend verticalement plus bas que le faisceau basse résolution (205).

5. Système d'éclairage selon l'une quelconque des revendications précédentes, **caractérisé en ce que** le faisceau basse résolution (205) présente une intensité lumineuse maximale plus élevée que le faisceau haute résolution (210).

6. Système d'éclairage selon l'une quelconque des revendications précédentes, **caractérisé en ce que** le premier dispositif émetteur de lumière (105) et le deuxième dispositif émetteur de lumière (115) sont adaptés pour projeter devant le véhicule une zone sombre correspondant à un véhicule, un piéton ou similaire venant de face.

7. Véhicule automobile, **caractérisé en ce qu'**il comporte un système d'éclairage selon l'une quelconque des revendications précédentes.

8. Véhicule automobile selon la revendication précédente, **caractérisé en ce que** le dispositif émetteur de lumière (105) adapté pour projeter devant le véhicule le faisceau basse résolution (120) est monté du même côté du véhicule que celui où se trouve le volant (130), et le dispositif émetteur de lumière (115) adapté pour projeter devant le véhicule le faisceau haute résolution (110) est monté de l'autre côté du véhicule.
